# EUROPÄISCHE PATENTSCHRIFT

(11) **EP 3 486 583 B1**
(45) Veröffentlichungstag und Bekanntmachung des Hinweises auf die Patenterteilung: **13.05.2020**
(21) Anmeldenummer: 18200669.2
(22) Anmeldetag: 16.10.2018
(51) Int. Cl.: F25B 49/00, H05B 33/08, G01M 3/20, G01M 3/24

(54) **KÄLTEKREIS MIT LECKAGESICHERUNG**
COOLING CIRCUIT WITH LEAK PREVENTION
CIRCUIT FROID À SÉCURITÉ ANTI-FUITE

(30) Priorität: 16.11.2017 DE 102017126957
(43) Veröffentlichungstag der Anmeldung: 22.05.2019
(73) Patentinhaber: Vaillant GmbH, 42859 Remscheid (DE)
(72) Erfinder: Lingk, Tobias, 42799 Leichlingen (DE); Spahn, Hans-Josef, 40699 Erkrath (DE); Szuder, Thomas-Friedrich, 51379 Leverkusen (DE)
(74) Vertreter: Popp, Carsten

(56) Entgegenhaltungen:
- EP-A1- 3 106 780
- DE-C1- 19 525 064
- US-A1- 2005 126 264
- US-A1- 2011 146 801

## Beschreibung

Die Erfindung betrifft irreguläre Zustände in Kältekreisen, in denen ein als Kältemittel wirkendes Arbeitsfluid in einem thermodynamischen Kreisprozess, wie zum Beispiel dem Clausius-Rankine-Kreisprozess, geführt wird. Vorwiegend sind dies Wärmepumpen, Klimaanlagen und Kühlgeräte, wie sie in Wohngebäuden gebräuchlich sind. Unter Wohngebäuden werden dabei Privathäuser, Miethauskomplexe, Krankenhäuser, Hotelanlagen, Gastronomie und kombinierte Wohn- und Geschäftshäuser und Gewerbebetriebe verstanden, in denen Menschen dauerhaft leben und arbeiten, im Unterschied zu mobilen Vorrichtungen wie KFZ-Klimaanlagen oder Transportboxen, oder auch Industrieanlagen oder medizintechnischen Geräten. Gemeinsam ist diesen Kreisprozessen, dass sie unter Einsatz von Energie Nutzwärme oder Nutzkälte erzeugen und Wärmeverschiebungssysteme bilden. Die Erfindung betriftt eine Vorrichtung zur sicheren Durchführung eines linksdrehenden thermodynamischen Clausius-Rankine-Kreisprozesses mittels eines entzündlichen Arbeitsfluids.

Die zum Einsatz kommenden thermodynamischen Kreisprozesse sind seit langem bekannt, ebenso die Sicherheitsprobleme, die bei der Verwendung geeigneter Arbeitsfluide entstehen können. Abgesehen von Wasser sind die bekanntesten damaligen Arbeitsfluide brennbar und giftig. Sie führten im vergangenen Jahrhundert zur Entwicklung der Sicherheitskältemittel, die aus fluorierten Kohlenwasserstoffen bestanden. Es zeigte sich jedoch, dass diese Sicherheitskältemittel die Ozonschicht schädigen, zur Klimaerwärmung führen, und dass ihre sicherheitstechnische Unbedenklichkeit zu konstruktiven Unachtsamkeiten führte. Bis zu 70 % des Umsatzes entfiel auf den Nachfüllbedarf undichter Anlagen und deren Leckageverluste, der hingenommen wurde, solange dies im Einzelfall als wirtschaftlich vertretbar empfunden wurde und Bedarf an Ersatzbeschaffung förderte.

Der Einsatz dieser Kältemittel wurde aus diesem Grund Restriktionen unterworfen, in der Europäischen Union beispielsweise durch die F-Gas-Verordnung (EU) 517/2014.

Es ist daher einerseits äußerst problematisch, die konstruktiven Prinzipien für Kältemittel-führende thermodynamische Prozesse zu übernehmen, die sich bei Sicherheitskältemitteln scheinbar gut bewährt haben, andererseits auf die Anlagenkonzepte aus der Zeit vor Einführung der Sicherheitskältemittel aufzusetzen. Dies liegt auch daran, dass inzwischen aus Einzelgeräten komplexe Anlagen geworden sind, was die Anzahl der Möglichkeiten für Störungen und deren Folgen vervielfältigt hat. Hierdurch ergeben sich beispielhaft die folgenden Anforderungen an das Sicherheitskonzept:
- Im Normalbetrieb muss die Anlage absolut dicht sein.
- Weder bei einer Leckage im Kondensator noch bei einer Leckage im Verflüssiger darf Arbeitsfluid in den gekoppelten Nutzwärme- oder Nutzkältekreislauf gelangen.
- Es darf kein Arbeitsfluid aus dem Kältekreislauf unbemerkt entweichen können.
- Im Verdichter darf das Arbeitsfluid nicht durch die Lagerung entweichen.
- Im Entspannungssystem darf das Arbeitsfluid nicht durch den Ventilsitz diffundieren oder durch Kavitation zu Leckagen führen.
- Gekapselte Teile müssen für Wartungs- und Kontrollzwecke zugänglich bleiben.
- In Notfällen dürfen sich keine Gefahren einstellen.
- Die Anlage soll in vorhandene Räumlichkeiten integrierbar sein
- Das Kältemittel soll abgelassen und eingefüllt werden können.

Der Begriff des Notfalls muss weit gesehen werden. Denkbar sind Stromausfälle, Erdbeben, Erdrutsche, Überschwemmungen, Brände, technische Fehler und klimatische Extrembedingungen. Sofern die Anlagen in einem Netzwerk betrieben werden, ist auch ein Netzausfall oder eine Netzstörung als Notfall anzusehen. Gegenüber solchen Gefahren oder Störungen soll die Vorrichtung inhärent sicher sein. Aber auch ein Ausfall der verfügbaren Primärenergie kann einen Notfall begründen und darf keine Gefahrentwicklung zur Folge haben. Alle diese Notfälle können auch kombiniert auftreten.

Hierbei sind die verschiedenen Bauformen und Anwendungsfälle für derartige thermodynamische Kreisprozesse gesondert zu berücksichtigen, bei ortsfesten Anlagen für Wohngebäude beispielsweise folgende:
- Haushaltskühlschränke,
- Haushaltsgefrierschränke,
- Haushaltstrockner,
- Haushaltskühl-Gefrierkombinationen,
- Kühlkammern für Hotel- und Gastronomie,
- Gefrierkammern für Hotel- und Gastronomie,
- Klimaanlage für Haus, Hotel- und Gastronomie,
- Warmwassererzeugung für Haus, Hotel- und Gastronomie,
- Beheizung für Haus, Hotel- und Gastronomie,
- Sauna-Schwimmbadanlagen für Haus, Hotel- und Gastronomie,
- Kombinierte Anlagen für die oben genannten Anwendungen,
wobei diese Aufzählung nicht vollständig ist.

Die Energie für den Betrieb der Anlagen einschließlich der zu verschiebenden Wärmeenergie kann aus verschiedenen Quellen stammen:
- Erdwärme aus Erdwärmespeichern,
- Geothermische Wärme,
- Fernwärme,
- Elektrische Energie aus allgemeiner Stromversorgung,
- Elektrische Solarenergie,
- Solarwärme,
- Abwärme,
- Warmwasserspeicher,
- Eisspeicher,
- Latentwärmespeicher,
- Fossile Energieträger wie Erdgas, Erdöl, Kohle,
- Nachwachsende Rohstoffe wie Holz, Pellets, Biogas,
- Kombinationen aus den oben genannten Energiequellen,
wobei auch diese Aufzählung nicht vollständig ist.

Die auftretenden Probleme bei der Sicherheitsauslegung solcher Anlagen werden in der WO 2015/032905 A1 anschaulich beschrieben. So liegt die untere Zündgrenze von Propan als Arbeitsfluid etwa bei 1,7 Volumenprozent in Luft, was 38 g/m³ in Luft entspricht. Sofern der Kälteprozess in einem ihn umgebenden, hermetisch abgeschlossenen, ansonsten aber luftgefüllten Raum mit dem Arbeitsfluid Propan durchgeführt wird, stellt sich das Problem der Erkennung einer kritischen, explosiven Situation nach einer Störung, bei der das Arbeitsfluid in diesen hermetisch abgeschlossenen Raum austritt. Elektrische Sensoren zur Erkennung kritischer Konzentrationen sind nur schwierig explosionsgeschützt auszuführen, weswegen gerade die Propan-Erkennung durch die Sensoren selbst das Explosionsrisiko erheblich verschärft, ausgenommen hiervon sind Infrarotsensoren. Propan ist auch giftig, bei Inhalation oberhalb einer Konzentration von ca. 2 g/m³ stellen sich narkotische Effekte, Kopfschmerzen und Übelkeit ein. Dies betrifft Personen, die ein erkanntes Problem vor Ort lösen sollen, noch bevor Explosionsgefahr entsteht.

Propan ist auch schwerer als Luft, sinkt also in ruhender Luft auf den Boden und sammelt sich dort an. Sollte sich also ein Teil des Propans in einer strömungsarmen Zone des abgeschlossenen Raums, in dem sich das gestörte Aggregat befindet, sammeln, können die lokalen Explosionsgrenzen wesentlich schneller erreicht werden, als es der Quotient aus Gesamtraumvolumen zu ausgetretener Propanmenge erwarten lässt. Die WO 2015/032905 A1 sucht dieses Problem zu lösen, indem ein Generator für elektrischen Strom in die Öffnung bzw. deren Verriegelung dieses Raums integriert wird und bei deren Betätigung in einem ersten Schritt die elektrische Energie erzeugt und bereitstellt, mit der der Sensor aktiviert wird, und der im Alarmfall die Verriegelung dann nicht freigibt, sondern eine Lüftung des abgeschlossenen Raums veranlasst, und erst in einem zweiten Schritt eine Entriegelung und Öffnung zulässt.

Schon zu Beginn der Technologie der Kompressionskältemaschinen wurde der Versuch unternommen, einen abgeschlossenen Raum zu bilden, in dem die apparativen Ausrüstungen alle sicher untergebracht werden konnten und der diese vollständig umhüllt. Die DE-PS 553 295 beschreibt eine gekapselte Kompressionskältemaschine, bei der der Kältemittelverdichter 1, sein Antriebsmotor 2, Verdampfer 3, Verflüssiger 4 und Regelventil 5 in einer doppelwandigen Kapsel 6 bzw. 7 eingeschlossen sind. Im Zwischenraum der doppelwandigen Kapsel wird ein Unterdruck angelegt und Leckagen, die an den Durchbrüchen für Kühlwasser und Sole auftreten könnten, abgesaugt. Das abgesaugte Arbeitsfluid kann im Anschluss daran ggf. zurückgewonnen werden. Zu bemerken ist dabei, dass sich innerhalb des gekapselten Raums keine Umgebungsluft befindet und aufgrund des Unterdrucks im Doppelmantel auch nicht in den gekapselten Innenraum eindringen kann.

Die EP 3 106 780 A1 beschreibt eine Wärmepumpenanlage, die in einem mit einem Bindemittel ausgekleideten, luftdichten Gehäuse untergebracht ist. Innerhalb dieses Gehäuses kann eine Adsorptionseinheit mit einer Zwangslüftung angeordnet sein, die im Umluftbetrieb die Luft im Gehäuse reinigt. Dieser Umluftbetrieb kann kontinuierlich oder nur im Störfall oder in regelmäßigen Intervallen erfolgen. Stromab dieser Sorptionsstufe kann auch ein Zündbrenner, eine Pilotflamme, ein katalytischer Brenner oder ein Heizdraht angeordnet sein, der ggf. restliche brennbare Verunreinigungen verbrennt. Ebenfalls denkbar ist eine Frischluftzufuhr in Verbindung mit der Ableitung gereinigter Abluft.

Die US 2005/0126264 A1 beschreibt ein manuell zu bedienendes Gerät zur Detektierung von Leckagen, welches einen Sensorkopf mit Sensoren aufweist. Diese Sensoren können auch Lichtimpulse senden und empfangen, beispielsweise im UV-Bereich. Die Sensoren dienen hauptsächlich zur Erkennung von chemischen Eigenschaften der bei Leckagen austretenden Substanzen.

Die US 2011/0146801 A1 beschreibt eine Vorrichtung zur Injektion von Additiven in ein geschlossenes System mittels eines Serviceanschlusses im Hochdruckabschnitt einer Wärmepumpe, einer Klimaanlage oder eines Gefriergerätes. Die Additive können dazu dienen, Austrittstellen bei Leckagen sichtbar zu machen.

Des Weiteren offenbart die DE 195 25 064 C1 eine Vorrichtung gemäß dem Oberbegriff des Anspruchs 1 zur sicheren Durchführung eines linksdrehenden thermodynamischen Clausius-Rankine-Kreisprozesses mittels eines entzündlichen Arbeitsfluids.

Die bekannten Systeme sind jedoch nicht in der Lage, den genauen Ort einer Leckage zu erkennen und zu melden, noch die Leckage selbstständig zu beheben. Die Aufgabe der Erfindung ist daher, eine Vorrichtung zur Verfügung zu stellen, die geeignet ist, den genauen Ort einer Leckage zu erkennen. Den soll sie melden und im Idealfall die Leckage selbstständig beheben.

Die Erfindung löst die Aufgabe durch eine Vorrichtung gemäß Anspruch 1. Sie ist eine Vorrichtung zur sicheren Durchführung eines linksdrehenden thermodynamischen Clausius-Rankine-Kreisprozesses mittels eines entzündlichen Arbeitsfluids, welches im gasförmigen Zustand unter Atmosphärenbedingungen schwerer als Luft ist und in einem geschlossenen, hermetisch dichten Arbeitsfluidumlauf geführt wird, aufweisend
- mindestens einen Verdichter für Arbeitsfluid,
- mindestens eine Entspannungseinrichtung für Arbeitsfluid,
- mindestens zwei Wärmeübertrager für Arbeitsfluid mit jeweils mindestens zwei Anschlüssen für Wärmeüberträgerfluide,
- ein dichtes Gehäuse, welches alle am geschlossenen Arbeitsfluidumlauf angeschlossenen Einrichtungen umfasst und weitere Einrichtungen umfassen kann,
- wobei dem Arbeitsfluid eine unter UV-Licht fluoreszierende Flüssigkeit oder ein unter UV-Licht fluoreszierendes feindisperses Salz beigemischt wird,
- im Inneren des Gehäuses eine Vielzahl von UV-Licht aussendenden Lichtquellen angebracht sind,
- im Inneren des Gehäuses mindestens ein CCD-Chip angebracht ist, welcher fluoreszierendes Licht detektiert und der einen UV-Filter besitzt,
- der CCD-Chip ein Signal ausgibt, wenn er fluoreszierendes Licht erkennt und die Richtung angibt, aus der dieses Signal kommt, und
- im Innenraum des Gehäuses eine Vielzahl von Spiegeln derart angeordnet ist, dass fluoreszierendes Licht, welches an Leckagen sichtbar wird, auf den CCD-Chip gespiegelt wird.

Als Wärmeübertragerfluide sind hier alle gasförmigen oder flüssigen Medien zu verstehen, mit denen Wärme übertragen wird, also etwa Luft, Wasser, Sole, Wärmeträgeröle oder dergleichen. Die Beimischung der unter UV-Licht fluoreszierenden Flüssigkeit oder dem unter UV-Licht fluoreszierenden feindispersen Salzes kann kontinuierlich oder einmal bei Befüllung vorgenommen werden.

Hierdurch wird erreicht, dass an einer kleinen Leckagestelle außerdem dem Arbeitsfluid auch eine unter UV-Licht fluoreszierende Flüssigkeit oder ein unter UV-Licht fluoreszierendes, feindisperses Salz aus dieser Leckagestelle austritt. Während das Arbeitsfluid unter den Innraumbedingungen des Gehäuses gasförmig wird, verbleibt die fluoreszierende Flüssigkeit oder das fluoreszierende Salz an der Leckagestelle zurück. Dieses wird durch die Lichtquellen, die in der Regel LEDs sind, zum Leuchten angeregt. Dieses Leuchten wird von dem CCD-Chip erkannt, worauf auf eine Leckage geschlossen wird.

Hierbei muss darauf geachtet werden, dass das ausgestrahlte UV-Licht keine Anteile von sichtbarem Licht, die ein Fehlsignal im CCD-Chip hervorrufen könnten, aufweist. Gegebenenfalls ist der CCD-Chip mit entsprechenden Farbfiltern zu versehen, die Licht, welches von den UV-Lichtquellen ausgesendet wird und nicht dem Frequenzspektrum der gewünschten Fluoreszenz entspricht, ausfiltern.

Mittel, die als fluoreszierende Flüssigkeiten oder Salze dienen können, sind im Stand der Technik allseits bekannt und können für entzündliche Arbeitsfluide wie beispielsweise Propan bzw. R290 im Handel bezogen werden. Beispielsweise kann Fluoreszein oder sein Natriumsalz Uranin, welches bei UV-Anregung stark grün leuchtet, verwendet werden.

Ausgestaltungen der Erfindung betreffen den CCD-Chip. Aufgrund der inzwischen günstigen Preise können auch mehrere solche CCD-Chips zum Einsatz kommen. Anders als in handelsüblichen Digitalkameras sollen diese aber keine scharfen Bilder erzeugen, sondern die Herkunft des Fluoreszenzlichts ermitteln. Hierbeikommt es darauf an, dass jeder Winkel, jedes Rohr, jede Rohrverbindung und jedes Bauteil, welches Arbeitsfluid führt, von allen Seiten beobachtet wird und an keinen unsichtbaren, versteckten Stellen unbemerkt Leckagen auftreten können.

Aus diesem Grund weist der CCD-Chip entweder ein Weitwinkelobjektiv ohne Blende auf, welches eine Rundumsicht ermöglicht, vorzugsweise ist das eine Weitwinkellinse oder sogenanntes Fischauge. Oder der Chip ist wie ein Facettenauge ausgebildet, wie es bei Mikrolinsen im Handel erhältlich ist. Auf diese Weise ist es möglich, dass jedem Raumwinkel ein bestimmtes Pixel des CCD-Chips zugeordnet werden kann, man auf diese Weise also erfährt, woher das auf eine Leckage hindeutende Leuchtsignal kommt. Damit lassen sich zunächst nur Leuchtspuren, die auf direktem Weg auf den CCD-Chip gelangen, detektieren.

Weitere Ausgestaltungen der Erfindungen betreffen die Mittel, um auch die übrigen Leuchtspuren detektierbar zu machen. Um auch Leckagen zu erkennen, die von anderen apparativen Vorrichtungen verdeckt sind oder sich an Rückseiten oder Unterseiten befinden, werden im Innenraum eine Vielzahl von Spiegeln angeordnet, die solche Leuchtspuren auf den CCD-Chip lenken. In vielen Fällen ist es sinnvoll, hierzu definiert gebogene Spiegel wie Hohlspiegel oder Parabolspiegel einzusetzen. Aus der Strahlengangberechnung kann dann auf die entsprechenden Leckagestellen indirekt geschlossen werden.

Eine Erhöhung der Präzision lässt sich erreichen, wenn immer jeweils zwei Leuchtspuren derselben Lichtquelle durch verschiedene Spiegel auf den CCD-Chip treffen und auf diese Weise eine Justierung oder Fehlerkorrektur erfolgen kann. Derselbe Effekt lässt sich auch durch Verwendung mehrerer CCD-Chips erreichen, diese sind jedoch teurer als Spiegel.

In einer weiteren Ausgestaltung der Erfindung ist vorgesehen, dass dem CCD-Chip eine Auswertungseinheit nachgeschaltet wird, die aus den Lichtsignalen der einzelnen Pixel die Orte ermittelt, an denen Fluoreszenz auftritt, und diese Orte an eine Steuerungseinheit weiterleitet, die ggf. einen Alarm oder Sicherheitsmaßnahmen auslöst.

Eine dieser Sicherheitsmaßnahmen ist die Beigabe eines Dichtmittels in das Arbeitsfluid, um kleine Leckagen zu verschließen. Hierzu wird vorgesehen, dass das Dichtmittel in einem separaten Behälter vorgehalten wird, der über eine ansteuerbare Verbindung an den Arbeitsfluidkreislauf angeschlossen ist, und automatisch gesteuert in den Arbeitsfluidkreislauf eingeschleust werden kann. Die Vorrichtung kann entsprechend der EP 2 918 987 A1 erfolgen, wobei der dort dargestellte Kolben 40 durch einen ansteuerbaren hydraulischen Zylinder zu ersetzen ist. Der Patentinhaber der EP 2 918 987 A1 Errecom bietet auch ein für R290 zugelassenes Dichtmittel unter dem Handelsnamen "Extreme White" an, welches hier verwendet werden kann.

In dem Fall, dass eine kleine Leckage erkannt wird, wird dann das Signal gegeben, das Dichtmittel automatisch zuzuführen und danach zu prüfen, ob die Leckage weiterhin besteht.

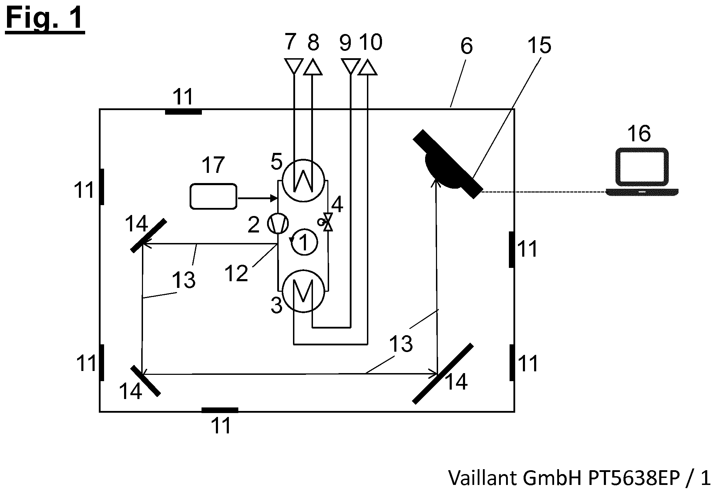

Die Erfindung wird nun anhand der Fig. 1 skizzenhaft näher erläutert.

zeigt eine Prinzipskizze eines Kältekreises 1 mit einem Verdichter 2, einem Kondensator 3, einer Druckreduzierung 4 und einem Verdampfer 5 in einem geschlossenen Gehäuse 6. Das Gehäuse 6 verfügt über einen Wärmequellen-Anschluss 7, einen Wärmequellen-Vorlauf 8, einen Wärmesenken-Vorlauf 9 und einen Wärmesenken-Anschluss 10. Der Kältekreis 1 wird in diesem Beispiel mit dem entzündlichen Arbeitsfluid Propan, welches auch unter der Bezeichnung R290 bekannt ist, betrieben, dem eine unter UV-Licht fluoreszierende Flüssigkeit wie Fluoreszein oder ein unter UV-Licht fluoreszierendes feindisperses Salz wie Uranin beigemischt wird.

Die UV-LEDs 11 beleuchten den Innenraum des Gehäuses mit UV-Licht. Diese Beleuchtung kann kontinuierlich oder über vordefinierte Zeitscheiben erfolgen. Tritt an einer Leckagestelle 12 Arbeitsfluid aus, bewirkt das fluoreszierende Mittel, welches im Gegensatz zum verdunstenden Propan zurückbleibt, aufgrund der UV-Anregung ein Leuchtsignal 13. Dieses Leuchtsignal 13 wird über die Spiegel 14 auf den CCD-Chip 15 gelenkt, dessen belichtete Pixel die beiden Raumwinkel angeben, aus denen das Leuchtsignal stammt. Daraus errechnet die Auswertungseinheit 16, die über die Koordinaten und die Ausrichtung der Spiegel verfügt, den Ort der Leckage sowie die mutmaßliche Größe.

Falls es sich um eine kleine Leckage handelt, wird durch die Dichtungsmittelzugabe 17 dem Arbeitsfluid Dichtungsmittel zugeführt und es wird nach kurzer Zeit geprüft, ob die Leckage erfolgreich abgedichtet worden ist.

### Bezugszeichenliste

- 1: Kältekreis
- 2: Verdichter
- 3: Kondensator
- 4: Druckreduzierung
- 5: Verdampfer
- 6: Gehäuse
- 7: Wärmequellen-Anschluss
- 8: Wärmequellen-Vorlauf
- 9: Wärmesenken-Vorlauf
- 10: Wärmesenken-Anschluss
- 11: UV-LEDs
- 12: Leckagestelle
- 13: Leuchtsignal
- 14: Spiegel
- 15: CCD-Chip
- 16: Auswertungseinheit
- 17: Dichtungsmittelzugabe

## Patentansprüche

1. Vorrichtung zur sicheren Durchführung eines linksdrehenden thermodynamischen Clausius-Rankine-Kreisprozesses (1) mittels eines entzündlichen Arbeitsfluids, mit einem entzündlichen Arbeitsfluid welches im gasförmigen Zustand unter Atmosphärenbedingungen schwerer als Luft ist, mit einem geschlossenen, hermetisch dichten Arbeitsfluidumlauf, welcher
- mindestens einen Verdichter (2) für das Arbeitsfluid,
- mindestens eine Entspannungseinrichtung (4) für das Arbeitsfluid, und
- mindestens zwei Wärmeübertrager (3, 5) für das Arbeitsfluid mit jeweils mindestens zwei Anschlüssen (7, 8, 9, 10) für Wärmeüberträgerfluide, aufweist, und mit
- einem dichten Gehäuse (6), welches alle am geschlossenen Arbeitsfluidumlauf angeschlossenen Einrichtungen umfasst und weitere Einrichtungen umfassen kann,
**dadurch gekennzeichnet, dass**
- dem Arbeitsfluid eine unter UV-Licht fluoreszierende Flüssigkeit oder ein unter UV-Licht fluoreszierendes feindisperses Salz beigemischt wird,
- im Inneren des Gehäuses eine Vielzahl von UV-Licht aussendenden Lichtquellen (11) angebracht sind,
- im Inneren des Gehäuses mindestens ein CCD-Chip (15) angebracht ist, welcher fluoreszierendes Licht detektiert und der einen UV-Filter besitzt,
- der CCD-Chip ein Signal ausgibt, wenn er fluoreszierendes Licht erkennt und die Richtung angibt, aus der dieses Signal kommt, und
- im Innenraum des Gehäuses (6) eine Vielzahl von Spiegeln (14) derart angeordnet ist, dass fluoreszierendes Licht, welches an Leckagen sichtbar wird, auf den CCD-Chip (15) gespiegelt wird, wobei die Vorrichtung die Vielzahl von UV-Licht aussendenden Lichtquellen (11), den mindestens ein CCD-chip (15) und die Vielzahl von Spiegeln (14) aufweist.

2. Vorrichtung nach Anspruch 1, **dadurch gekennzeichnet, dass** der CCD-Chip (15) über ein Weitwinkelobjektiv ohne Blende verfügt, welches eine Rundumsicht ermöglicht.

3. Vorrichtung nach Anspruch 1, **dadurch gekennzeichnet, dass** der CCD-Chip (15) über ein Facettenauge verfügt, welches eine Rundumsicht ermöglicht.

4. Vorrichtung nach einem der Ansprüche 2 oder 3, **dadurch gekennzeichnet, dass** jedem Pixel des CCD-Chips (15) je ein Raumwinkel zugeordnet wird.

5. Vorrichtung nach Anspruch 1, **dadurch gekennzeichnet, dass** als Vielzahl von Spiegeln (14) gebogene Spiegel verwendet werden, deren Brennpunkt auf den CCD-Chip (15) gerichtet ist.

6. Vorrichtung nach einem der Ansprüche 1 oder 5, **dadurch gekennzeichnet, dass** jeder Ort, an dem eine Leckage auftreten kann, durch jeweils mindestens zwei Spiegel (14) auf den CCD-Chip (15) geworfen wird.

7. Vorrichtung nach einem der Ansprüche 1 bis 6, **dadurch gekennzeichnet, dass** dem CCD-Chip (15) eine Auswertungseinheit (16) nachgeschaltet wird, die aus den Lichtsignalen der einzelnen Pixel die Orte ermittelt, an denen Fluoreszenz auftritt, und diese Orte an eine Steuerungseinheit weiterleitet, die ggf. einen Alarm oder Sicherheitsmaßnahmen auslöst.

8. Vorrichtung nach einem der Ansprüche 1 bis 7, **dadurch gekennzeichnet, dass** dem Arbeitsfluid ein Dichtmittel beigefügt wird, um kleine Leckagen zu verschließen.

9. Vorrichtung nach Anspruch 8, **dadurch gekennzeichnet, dass** das Dichtmittel in einem separaten Behälter vorgehalten wird, der über eine ansteuerbare Verbindung an den Arbeitsfluidkreislauf angeschlossen ist, und automatisch gesteuert in den Arbeitsfluidkreislauf eingeschleust werden kann.

## Claims

1. Device for the secure implementation of a laevorotatory thermodynamic Clausius-Rankine cyclic process (1) by means of an inflammable working fluid, having an inflammable working fluid which in gaseous state under atmospheric conditions is heavier than air, having a closed, hermetically sealed working fluid circulation, which has
- at least one compressor (2) for the working fluid,
- at least one relaxation unit (4) for the working fluid, and
- at least two heat exchangers (3, 5) for the working fluid having respectively at least two connections (7, 8, 9, 10) for heat exchange fluids, and having
- a sealed housing (6) which includes all devices connected to the closed working fluid circulation and can include further devices,
**characterised in that**
- to the working fluid is added a liquid which fluoresces under UV light or a fine-particle salt which fluoresces under UV light,
- in the interior of the housing are mounted a plurality of light sources (11) emitting UV light,
- in the interior of the housing is mounted at least one CCD chip (15) which detects fluorescing light and which has a UV filter,
- the CCD chip outputs a signal when it detects fluorescing light and specifies the direction from which this signal comes, and
- in the interior of the housing (6) is arranged a plurality of mirrors (14) such that fluorescing light, which becomes visible in the case of leakages, is mirrored onto the CCD chip (15), wherein the device has the plurality of light sources (11) emitting UV light, the at least one CCD chip (15) and the plurality of mirrors (14).

2. Device according to claim 1, **characterised in that** the CCD chip (15) has a wide angle lens without aperture which facilitates a panoramic view.

3. Device according to claim 1, **characterised in that** the CCD chip (15) has a compound eye which facilitates a panoramic view.

4. Device according to any of claims 2 or 3, **characterised in that** to each pixel of the CCD chip (15) in each case one solid angle is assigned.

5. Device according to claim 1, **characterised in that** as a plurality of mirrors (14) curved mirrors are used, the focal point of which is directed onto the CCD chip (15).

6. Device according to any of claims 1 or 5, **characterised in that** each location at which a leakage can occur is thrown onto the CCD chip (15) by respectively at least two mirrors (14).

7. Device according to any of claims 1 to 6, **characterised in that** downstream from the CCD chip (15) is connected an evaluation unit (16) which determines from the light signals of the individual pixels the locations at which fluorescence emerges and forwards these locations to a control unit which where appropriate triggers an alarm or security measures.

8. Device according to any of claims 1 to 7, **characterised in that** to the working fluid is added a sealant, in order to close small leakages.

9. Device according to claim 8, **characterised in that** the sealant is held in a separate container which is connected via a controllable connection to the working fluid circulation, and which can be channelled into the working fluid circulation in an automatically controlled manner.

## Revendications

1. Dispositif de réalisation en sécurité d'un processus de cycle de Clausius-Rankine (1) thermodynamique tournant à gauche au moyen d'un fluide de travail inflammable, avec un fluide de travail inflammable qui est plus lourd que l'air dans l'état gazeux dans des conditions d'atmosphère, avec une circulation de fluide de travail fermée, hermétiquement étanche qui présente
- au moins un compresseur (2) pour le fluide de travail,
- au moins un dispositif de détente (4) pour le fluide de travail, et
- au moins deux transmetteurs de chaleur (3, 5) pour le fluide de travail avec respectivement au moins deux raccords (7, 8, 9, 10) pour des fluides de transmetteurs de chaleur, et avec
- un boîtier (6) étanche qui comporte tous les dispositifs raccordés à la circulation de fluide de travail fermée et peut comprendre d'autres dispositifs,
**caractérisé en ce que**
- un liquide fluorescent sous lumière UV ou un sel à dispersion fine fluorescent sous lumière UV est mélangé au fluide de travail,
- une pluralité de sources de lumière (11) émettant de la lumière UV est montée à l'intérieur du boîtier,
- au moins une puce CCD (15) est montée à l'intérieur du boîtier, laquelle détecte de la lumière fluorescente et laquelle possède un filtre UV,
- la puce CCD émet un signal lorsqu'elle reconnait de la lumière fluorescente et indique la direction de laquelle ce signal vient, et
- une pluralité de miroirs (14) est agencée à l'intérieur du boîtier (6) de telle manière que de la lumière fluorescente qui est visible au niveau de fuites, soit reflétée sur la puce CCD (15), dans lequel le dispositif présente la pluralité de sources de lumière (11) émettant de la lumière UV, l'au moins une puce CCD (15) et la pluralité de miroirs (14).

2. Dispositif selon la revendication 1, **caractérisé en ce que** la puce CCD (15) dispose d'un objectif grand angle sans diaphragme qui permet une vue panoramique.

3. Dispositif selon la revendication 1, **caractérisé en ce que** la puce CCD (15) dispose d'un œil à facettes qui permet une vue panoramique.

4. Dispositif selon l'une des revendications 2 ou 3, **caractérisé en ce qu'un** angle spatial est associé chaque fois à chaque pixel de la puce CCD (15).

5. Dispositif selon la revendication 1, **caractérisé en ce que** des miroirs pliés sont utilisés comme pluralité de miroirs (14), dont le foyer est dirigé sur la puce CCD (15).

6. Dispositif selon l'une des revendications 1 ou 5, **caractérisé en ce que** chaque lieu au niveau duquel une fuite peut survenir, est projeté par respectivement au moins deux miroirs (14) sur la puce CCD (15).

7. Dispositif selon l'une des revendications 1 à 6, **caractérisé en ce qu'**une unité d'évaluation (16) est montée en aval de la puce CCD (15), laquelle détermine à partir des signaux de lumière des pixels individuels les lieux au niveau desquels de la fluorescence survient, et transmet ces lieux à une unité de commande qui déclenche éventuellement une alarme ou des mesures de sécurité.

8. Dispositif selon l'une des revendications 1 à 7, **caractérisé en ce qu'**un moyen étanche est joint au fluide de travail afin de fermer de petites fuites.

9. Dispositif selon la revendication 8, **caractérisé en ce que** le moyen étanche est maintenu dans un récipient séparé qui est raccordé par une liaison commandable au circuit de fluide de travail, et peut être inséré par commande automatique dans le circuit de fluide de travail.
